# EUROPÄISCHE PATENTSCHRIFT

(11) **EP 1 774 882 B1**
(45) Veröffentlichungstag und Bekanntmachung des Hinweises auf die Patenterteilung: **17.03.2010**
(21) Anmeldenummer: 06021215.6
(22) Anmeldetag: 10.10.2006
(51) Int. Cl.: A47J 31/40

(54) **Kaffeemaschine**
Coffeemachine
Machine à café

(30) Priorität: 14.10.2005 DE 102005049625
(43) Veröffentlichungstag der Anmeldung: 18.04.2007
(73) Patentinhaber: NIRO-PLAN AG, 4663 Aarburg (CH)
(72) Erfinder:
(74) Vertreter: Lemcke, Brommer & Partner

(56) Entgegenhaltungen:
- DE-U1- 9 115 998

## Beschreibung

Die Erfindung betrifft eine Kaffeemaschine mit einem Brühkopf, einem oberen Verschlusselement und einem unteren Verschlusselement, wobei der Brühkopf eine zylinderförmige Brühkammer mit vertikaler Zylinderachse aufweist, die durch das obere Verschlusselement und das untere Verschlusselement verschließbar ist und wobei der Brühkopf an zumindest einen vertikalen Führungselement festgelegt und über dieses höhenverstellbar in der Kaffeemaschine angeordnet ist.

Brühkopf und oberes sowie unteres Verschlusselement bilden zusammen eine Brüheinheit, die insbesondere bei den vollautomatisierten Kaffeemaschinenautomaten im Wesentlichen dazu dienen, portionsweise gemahlenes Kaffeepulver in der Brühkammer auf dem unteren Verschlusselement liegend aufzunehmen, mit Hilfe des oberen Verschlusselementes dieses Kaffeepulver zu einer so genannten Tablette zu verdichten, nachfolgend den eigentlichen Brühvorgang unter Beaufschlagung der Tablette mit Wasserdampf bzw. kochendem Wasser durchzuführen und anschließend das ausgelaugte Kaffeepulver aus der Brüheinheit abzuführen, um einen neuen Brühzyklus beginnen zu können. Diese Grundphasen eines Brühvorganges können durch verschiedene Zwischenschritte wie kurzzeitiges Entlasten der Tablette, Auspressen der ausgelaugten Tablette, Spülen des oberen Verschlusselementes etc. ergänzt werden.

Um hierbei das ausgelaugte Kaffeepulver vollständig entfernen zu können, wird das untere Verschlusselement vertikal nach oben verfahren, bis es mit der Oberkante der Brühkammer fluchtet, worauf hin ein Auswerfer eine horizontale Schwenkbewegung durchführt und hierdurch die Tablette von dem unteren Verschlusselement abstreift in eine neben der Brühkammer angeordneten Auffangbehälter. Um das vertikale Verfahren des unteren Verschlusselementes bis zur Oberkante der Brühkammer und auch um das anschließende Einfüllen frischen Kaffeepulvers in die Brühkammer zu ermöglichen, wird nach dem Brühvorgang und vor dem Auswerfen das obere Verschlusselement vertikal nach oben aus der Brühkammer und aus dem horizontalen Schwenkbereich des Auswerfers herausgefahren.

Es sind im Stand der Technik bereits einige Vorschläge für das Synchronisieren dieser komplexen und ineinander greifenden Bewegungsabläufe offenbart. Um die Relativbewegung des Brühkopfs gegenüber dem oberen Verschlusselement durchzuführen, gibt es bei einer Gruppe von Kaffeemaschinenautomaten die Variante, dass nicht das obere Verschlusselement in Vertikalrichtung verfahren wird, sondern dass dieses ortsfest angeordnet ist und dass der gesamte Brühkopf in Vertikalrichtung verfahren wird, wobei dieser über zwei vertikale Führungselemente bei dieser vertikalen Höhenverstellung geführt und/oder angetrieben wird. Das Dokument DE 9115 998U offenbart solch eine Kaffeemaschine. Die vertikale Relativbewegung des unteren Verschlusselementes gegenüber dem Brühkopf erfolgt dann ebenso durch vertikales Verfahren des Brühkopfs, wobei das an sich am Brühkopf festgelegte, jedoch gegenüber dem Brühkopf höhenverstellbare untere Verschlusselement gegen einen unteren Anschlag verfahren wird und so ein weiteres Absenken des Brühkopfs zu einer Relativbewegung des unteren Verschlusselements gegenüber dem Brühkopf und der Brühkammer nach oben führt.

Im Stand der Technik gibt es darüber hinaus auch Kaffeemaschinen mit ortsfesten Brühköpfen, wobei das obere und das untere Verschlusselement demgegenüber höhenverstellbar angeordnet sind. Diese Kaffeemaschinen haben jedoch den Nachteil, dass sich die Höhe der Brüheinheit in Abhängigkeit vom Brühzyklus ändert und so der Bauraum der Kaffeemaschine für diese Brüheinheit an die jeweiligen maximalen Höhenpositionen angepasst werden muss.

Bei beiden beschriebenen Gruppen von Kaffeemaschinen ist zumindest eine zylindrische Führungssäule und eine Antriebsgewindespindel vorgesehen, um eine verdrehfeste Höhenverstellung des Brühkopfs bzw. des oberen und/oder unteren Verschlusselementes zu erreichen. Dies kann zu ungleichmäßigen Kraftverteilungen im Zuge der Höhenverstellung führen, die bei einer bekannten Kaffeemaschine beispielsweise dadurch vermieden werden, dass eine mittige Gewindespindel die Hubbewegung des oberen Verschlusselementes durchführt, während zwei seitliche Führungssäulen für eine symmetrische und gleichmäßige Führung bzw. Kraftverteilung sorgen. Für eine Kaffeemaschine mit höhenverfahrbarem Brühkopf ist eine solche mittige Gewindespindel als Antrieb jedoch nicht geeignet und auch das Verwenden von zwei seitlichen Führungssäulen macht die gesamte Brüheinheit doch vergleichsweise aufwendig und teuer.

Eine Hauptgrund für die Verwendung von zylindrischen Führungssäulen und einer gegenüber der Brühkammer abgeschotteten Antriebsspindel besteht bei einem höhenverstellbaren Brühkopf darin, dass die Antriebsspindel störungsfrei arbeiten können muss, um die vertikale Antriebsbewegung direkt und verzögerungsfrei auf den Brühkopf übertragen zu können. Würde die Antriebsspindel den Brühkopf in einem Bereich beaufschlagen, der Verschmutzungen ausgesetzt ist, also beispielsweise durch Kaffeepulver oder Kaffee, so könnte dies vor allem bei den beim Brühen des Kaffees erforderlichen hohen Temperaturen zu einem Festbacken des Kaffees an der Gewindespindel bzw. an dem die Gewindespindel beaufschlagenden Bereich des Brühkopfs führen, was die vertikale Antriebsbewegung entsprechend hemmen bzw. stören könnte.

Hiervon ausgehend liegt der vorliegenden Erfindung die Aufgabe zugrunde, eine Kaffeemaschine der eingangs genannten Art zur Verfügung zu stellen, die die beschriebenen Nachteile vermeidet und so ein störungsfreieres Antreiben des Brühkopfs ermöglicht.

Diese Aufgabe wird erfindungsgemäß dadurch gelöst, dass das Führungselement aus einer Gewindespindel besteht, dass der Brühkopf über eine Spindelmutter an der Gewindespindel festgelegt ist und dass die Spindelmutter an ihrer die Spindel beaufschlagenden radialen Innenseite zumindest eine sich über die gesamte Höhe der Spindelmutter erstreckende Öffnung in Form eines lokalen Rücksprungs bzw. einer lokalen radialen Querschnittsvergrößerung aufweist, wodurch also eine einseitige Vergrößerung der sich durch die Spindelmutter erstreckenden Gewindebohrung erhalten wird.

Hierdurch ergibt sich der wesentliche Vorteil, dass etwaiger Schmutz entlang der eine Entlastungsnut bildenden Öffnung zu der Unterseite der Spindelmutter abgeführt werden kann und so verhindert wird, dass der Schmutz an der Spindelmutter oder an der Gewindespindel verbleibt und sich dort beispielsweise festsetzt.

Was die Ausgestaltung dieser Öffnung bzw. Entlastungsnut betrifft, so ist es zum einen möglich, dass sich die Öffnung im Wesentlichen in Axialrichtung, also parallel zur Spindel- bzw. Mutterachse erstreckt. Ebenso kann jedoch die Öffnung bzw. die Entlastungsnut auch schraubengangförmig verlaufen, wobei die Steigung dieser Entlastungsnut natürlich unterschiedlich von der Gewindesteigung der Spindelmutter sein sollte.

Darüber hinaus kann die Öffnung bzw. die Entlastungsnut einen über die axiale Länge im Wesentlichen gleich bleibenden Horizontalquerschnitt aufweisen oder aber auch einen sich über die axiale Länge nach unten vergrößernden Horizontalquerschnitt, um das Abführen des Kaffeepulvers bzw. Kaffees zu erleichtern.

Sowohl was die in Umfangsrichtung der Gewindemutter gemessene Breite der Öffnung als auch was die in Radialrichtung der Gewindemutter gemessene Tiefe der Öffnung betrifft, so empfiehlt es sich, wenn sie in der Größenordnung von wenigen Millimetern liegt, beispielsweise bei einer Gewindespindel mit etwa 8 mm Durchmesser eine Größe von 2 mal 4 mm bezogen auf den Horizontalquerschnitt aufweist.

Es ist nicht nur möglich, nur eine Öffnung bzw. eine Entlastungsnut an der Spindelmutter vorzusehen, sondern darüber hinaus kann es in bestimmten Anwendungsfällen auch von Vorteil sein, wenn zwei oder drei oder sogar mehrere entsprechend kleinere Öffnungen verteilt über den Umfang angeordnet sind und so eine größere Anzahl an Entlastungsnuten bildet, die sich zweckmäßigerweise parallel zueinander über die Höhe der Spindelmutter erstrecken.

Die Spindelmuttern sind sowohl für rechts- wie auch für linksgängige Gewindespindeln verwendbar mit entsprechender Steigungsrichtung der Spindelmuttern.

Der besondere Vorteil der Verwendung solcher Spindelmuttern mit Entlastungsnuten liegt nun vor allem darin, dass auf die bisher üblichen Abschirmungsmaßnahmen zur Vermeidung einer Verschmutzung der Gewindespindeln bzw. von die Gewindespindeln beaufschlagenden Gewindemuttern verzichtet werden kann, die meist zu Lasten der Bauhöhe gingen. Indem nun keine solche separate Abschirmung vorgesehen sein muss, lässt sich die Bauhöhe entsprechend reduzieren und hierzu wird in einfacher Weise der etwaige die Gewindespindel und/oder die Spindelmutter beaufschlagende Schmutz durch die Spindelmutter entlang der Gewindespindeln nach unten abgeführt und kann von dort auf den Kaffeemaschinenboden fallen, wo er keine weiteren Probleme verursacht.

Grundsätzlich lässt sich natürlich das Prinzip der Spindelmuttern mit Entlastungsnuten auch für glattzylindrische Führungshülsen von Führungssäulen verwenden. Dort spielt aber die Verschmutzung in der Regel keine so große Rolle, da zum einen der Spalt zwischen Führungshülse und Führungssäule in der Regel kleiner bemessen ist und da zum anderen keine sich dem Schmutz entgegenstellenden horizontalen bzw. geneigten Flächen (wie beim Gewinde) vorhanden sind, die das Abführen des Schmutzes behindern würden.

Wie bereits erwähnt, kann in vorteilhafter Weise vorgesehen sein, dass die zwei Führungselemente aus jeweils einer Gewindespindel bestehen und dass die Gewindespindeln gegenläufige Gewindesteigungen aufweisen. Indem man auf die üblichen glattzylindrischen Führungssäulen verzichtet und die Antriebskraft der Höhenverstellung über zwei Gewindespindeln in die Brüheinheit der Kaffeemaschine einbringt, ist an sich schon eine bessere Kraftverteilung bei der Höhenverstellung möglich, da sich die Antriebskräfte besser über den Horizontalquerschnitt der Kaffeemaschine verteilen lassen. Indem aber darüber hinaus auch noch die Gewindesteigungen der Gewindespindeln gegenläufig ausgeführt sind, lässt sich hierdurch nicht nur eine insgesamt symmetrische Kraftverteilung, sondern auch eine symmetrische Momentenverteilung erreichen, die bei geeigneter Anordnung und Dimensionierung sogar zu einem gegenseitigen Aufheben der Antriebsmomente führen kann.

Hierzu ist es besonders von Vorteil, wenn die beiden Führungselemente symmetrisch zur vertikalen Zylinderachse der Brühkammer angeordnet sind und wenn vor allem die Zylinderachse der Brühkammer in der von den Achsen der Führungselemente gebildeten Ebene liegt. Werden dann die Führungselemente synchron in entgegengesetzter Richtung angetrieben, so kann der Brühkopf momenten- und verwindungsfrei in Vertikalrichtung bewegt werden, ohne dass hierzu weitere Führungssäulen oder sonstige Stabilitätselemente erforderlich wären.

Zweckmäßigerweise bestehen das obere und/oder untere Verschlusselement aus einem Kolben, der an den Zylinderquerschnitt der Brühkammer angepasst ist. Darüber hinaus ist es zweckmäßig, wenn die Kaffeemaschine ein die Führungselemente miteinander verbindendes Gestell aufweist, was am Besten dadurch erfolgt, dass das Gestell die jeweiligen Endbereiche der Gewindespindeln miteinander verbindet und zwar nicht nur die oberen Endbereiche beider Gewindespindeln untereinander, sondern insbesondere auch die oberen Endbereiche beider Gewindespindeln mit den unteren Gewindespindelendbereichen, indem beispielsweise ein seitlich von den Gewindespindeln verlaufender Rahmen vorgesehen wird.

Da der Brühkopf höhenverstellbar angeordnet ist, ist es ausreichend, wenn der obere Kolben in an sich bekannter Weise ortsfest am Gestell festgelegt ist und nur der untere Kolben relativ zum Brühkopf höhenverstellbar am Brühkopf festgelegt und zusammen mit dem Brühkopf höhenverstellbar ist, wobei der untere Kolben am Gestell abstützbar ist.

Darüber hinaus ist es von besonderem Vorteil, wenn die beiden Gewindespindeln über einen gemeinsamen Motor antreibbar sind, wodurch der synchrone gegenläufige Antrieb der beiden Gewindespindeln keine Schwierigkeiten bedeutet, sondern lediglich entsprechende Getriebe, wie beispielsweise zwei gegenläufige Schneckengetriebe zwischengeschaltet werden müssen. Daneben ist aber natürlich auch ein synchroner Antrieb über zwei oder mehrere Motoren möglich, wobei der oder die Motoren an beliebigen Positionen der Führungselemente angeordnet sein kann/können.

Weiter ist es zweckmäßig, wenn der Brühkopf einen Kaffeesatzauswerfer aufweist und der Kaffeesatzauswerfer über eine mit dem Gestell verbundene Kulissenführung hinsichtlich seiner Auswerferbewegung in Abhängigkeit von der Höhenposition des Brühkopfs relativ zum Gestell steuerbar ist, wobei die Kulissenführung an dem zuvor erwähnten seitlichen Rahmen positioniert sein kann.

Wenn der Brühkopf zumindest mittelbar am Führungselement in lösbarer Weise, insbesondere über einen Schnell- oder Schraubverschluss festgelegt wird, muss das Führungselement in vorteilhafter Weise nicht extra demontiert werden, wenn man den Brühkopf austauschen will.

Bisher waren die Führungselemente nahezu integraler Beanstandteil des Brühkopfs, indem sie den Brühkopf vollständig umgriffen und eine Demontage des Brühkopfs nur nach einem vorherigen Entfernen des Führungselements in Axialrichtung des Führungselements möglich war, was zuvor aber eine Vielzahl von Demontagearbeiten an den Enden der Führungselemente erforderlich machte. Hierbei mussten also insbesondere die Führungselemente zunächst aus der Wirkverbindung mit dem Gestell und mit allen anderen angekoppelten Bauteilen gebracht werden. Bei der erfindungsgemäßen lösbaren Festlegung des Brühkopfs werden diese umständlichen Demontagearbeiten vermieden: Das Entfernen des Brühkopfs kann in einfacher Weise dadurch erfolgen, dass nur die Wirkverbindung des Brühkopfs mit dem Führungselement aufgehoben wird und alle anderen Bauteile in der eingebauten Position verbleiben können. Somit muss weder das Führungselement (bzw. die Führungselemente) aus dem Gestell entfernt werden, noch muss der Brühkopf entlang der Führungselementachse bis zum Ende des Führungsgestells verschoben werden, was natürlich in der Regel aufgrund des dort positionierten Gestells oder anderer Kaffeemaschinenkomponenten gar nicht möglich ist.

Besonders vorteilhaft ist es in diesem Zusammenhang, wenn der Brühkopf von dem zumindest einen Führungselement in einer Richtung quer zur Längsachse des Führungselements abnehmbar ist, was die günstigste Demontagerichtung darstellt, da eine Demontage in Richtung der Längsachse des Führungselements in der Regel zu einer Kollision mit den darüber oder darunter angeordneten Bauteilen führen würde. Denn bei der üblicherweise erforderlichen möglichst geringer Bauhöhe kann kaum in Vertikalrichtung ein Platz zum kollisionsfreien Entfernen des Brühkopfs vom Führungselement zur Verfügung gestellt werden.

Besonders vorteilhaft ist es, wenn der Brühkopf an zwei Führungselementen festgelegt und von diesen entsprechend in Querrichtung abnehmbar ist. Auch in diesem Zusammenhang ist es wesentlich, dass der Brühkopf von dem Führungselement ohne Demontage des Führungselements von einem die Endbereiche des Führungselements miteinander verbindenden Gestell abnehmbar ist.

Was die Art der lösbaren Festlegung betrifft, so empfiehlt es sich, dass der Brühkopf über eine Schraub- und/oder Steckverbindung zumindest mittelbar am Führungselement festgelegt ist. Besonders vorteilhaft ist es in diesem Zusammenhang, wenn eine das Führungselement beaufschlagende Führungshülse oder Führungsmutter am Führungselement verbleibt und der Brühkopf lösbar an dieser Führungshülse oder dieser Führungsmutter festlegbar ist. Dies hat insbesondere einen großen Vorteil bei Verwendung von Gewindespindeln als Führungselement, die grundsätzlich ein vertikales Verschieben ohne Betätigung der Gewindespindel gar nicht zulassen. Hierbei könnte demnach die Führungs- bzw. Spindelmutter in der jeweiligen Brühkopfhöhenposition am Führungselement verbleiben, der Brühkopf von der Spindelmutter abgezogen werden und anschließend würde beim Montieren des Brühkopfs an die Spindelmutter sichergestellt, dass der Brühkopf auch gleich in der richtigen vorgegebenen Höhenposition platziert wird.

Diese Vorgabe der Höhenposition ist vor allem auch dann von Vorteil, wenn der Brühkopf über zwei Gewindespindeln angetrieben und von diesen durchquert wird. In diesem Fall sorgen die beiden Spindelmuttern für die Beibehaltung der exakten Höhenposition, sodass auch nach einem erneuten Montieren kein Höhenversatz zwischen den Anlenkungspositionen des Brühkopfes an der Gewindespindel auftritt.

Ein besonderer Vorteil dieser lösbaren Festlegung des Brühkopfs am Führungselement bzw. an den Führungselementen besteht nun darin, dass man durch das erwähnte schnelle Austauschen aller Verschleißteile die gesamte Kaffeemaschine in kürzester Zeit komplett umbauen kann: Denn durch bloßes Austauschen des oberen Kolbens sowie des Brühkopfs mit integriertem unteren Kolben ist es möglich, Brüheigenschaften der Kaffeemaschine zu verändern. Beispielsweise kann man den Brühkopf gegen einen Brühkopf mit unterschiedlichen Abmessungen austauschen, wobei natürlich oberer und unterer Kolben entsprechend in ihrer Dimensionierung angepasst werden müssen. Das heißt dann, dass man beispielsweise aus einer Kaffeemaschine ohne große Umrüst- und Demontagearbeiten eine Espressomaschine machen kann und umgekehrt.

Neben einer Änderung des Brühkammerdurchmessers wirkt sich auf die Art des gebrühten Kaffees beispielsweise auch die Gestaltung des Siebs aus, durch welches der Kaffee gedrückt wird. So kann man beispielsweise ein Sieb mit unterschiedlicher Maschenweite verwenden oder stattdessen ein Nadelfilter, wozu lediglich der obere Kolben - oder je nach dem, wo das Sieb angeordnet wird, auch unter Umständen der untere Kolben - entsprechend ausgetauscht werden muss.

Bei einem besonders bevorzugten Ausführungsbeispiel erfolgt das Abnehmen des Brühkopfes vom Führungselement in Querrichtung durch eine kombinierte rotatorische und translatorische Verstellbewegung, indem zunächst eine Schraubverbindung des Brühkopfs mit der Spindelmutter der einen (z.B. linken) Gewindespindel gelöst wird, der Brühkopf von dieser linken Gewindespindel in Horizontalrichtung weggeschwenkt wird, wobei die rechte Gewindespindel als Drehachse fungiert und woraufhin dann bei Erreichen eines Verschwenkwinkels von z.B. 90° die bis dahin formschlüssige Verbindung des Brühkopfs mit der rechten Spindelmutter der rechten Gewindespindel aufgehoben wird und der Brühkopf in einfacher Weise ebenfalls in Horizontalrichtung von der Spindelmutter abgezogen werden kann. Alternativ dazu ist natürlich auch eine andere Art der Demontage möglich, also beispielsweise nur eine rotatorische oder nur eine translatorische Demontagebewegung. Gleiches gilt natürlich auch für die Montage, die dann in umgekehrter Richtung erfolgen muss.

Es reicht also bereits eine einzige lösbare Verbindung, um den Brühkopf aus der Wirkverbindung mit dem Führungselement oder auch mit zwei Führungselementen zu entfernen. Dies kann von jedem Servicetechniker problemlos ohne größere Zusatzarbeiten oder Zusatzwerkzeuge durchgeführt werden, was die Wartung der erfindungsgemäßen Kaffeemaschine deutlich vereinfacht und verbessert.

Wie bereits erwähnt, ist jedoch die erfindungsgemäße Kaffeemaschine nicht nur vorteilhaft im Hinblick auf Servicearbeiten, sondern durch die einfache Austauschbarkeit wird eine modulare Kaffeemaschine geschaffen, die mit einem Basisteil auskommt und wobei an dieses Basisteil zur Erstellung unterschiedlicher Kaffeemaschinen lediglich unterschiedliche Brühköpfe und Kolben angefügt werden müssen. Dieses Anfügen unterschiedlicher Brühköpfe bzw. Kolben kann nicht nur bei der Neuherstellung erfolgen, wodurch sich die Variantenvielfalt der verwendeten Einzelteile deutlich reduzieren lässt; dieses Austauschen kann darüber hinaus - wie vorstehend bereits erwähnt - auch im Rahmen von Umrüstarbeiten nachträglich erfolgen. Somit kann beispielsweise eine Kaffeemaschine eines bestimmten Kaffeetyps, der sich keiner allzu großen Nachfrage bei den Kaffeemaschinenbenutzern erfreut, gegen dieselbe Kaffeemaschine "ausgetauscht" werden für einen anderen Kaffeemaschinentyp.

Die erfindungsgemäßen Vorteile lassen sich nicht nur bei Brühköpfen mit vertikaler Brühkammerachse erzielen, sondern auch bei Brühköpfen mit horizontaler Brühkammerachse. Demnach sind vorliegende Richtungsangaben wie vertikal, obere und untere nur beispielhaft und demnach soll sich der Schutz der vorliegenden Erfindung unabhängig von diesen Richtungsangaben auch auf davon abweichende Richtungen erstrecken. Demnach liegt es beispielsweise ebenfalls im Rahmen der Erfindung anstatt von einem oberen Kolben von einem ersten seitlichen Kolben oder anstatt von einem unteren Kolben von einem zweiten seitlichen Kolben sowie anstatt von einem vertikalen Führungselement oder einer vertikalen Brühkammerachse von einem horizontalen Führungselement oder einer horizontalen Brühkammerachse auszugehen.

Weitere Merkmale und Vorteile der vorliegenden Erfindung ergeben sich aus der nachfolgenden Beschreibung eines Ausführungsbeispiels anhand der Zeichnungen; hierbei zeigen
- Figur 1: eine erfindungsgemäße Kaffeemaschine in perspektivischer Seitenansicht;
- Figuren 2 bis 6: eine Spindelmutter für die erfindungsgemäße Kaffeemaschine in verschiedenen Ansichten.

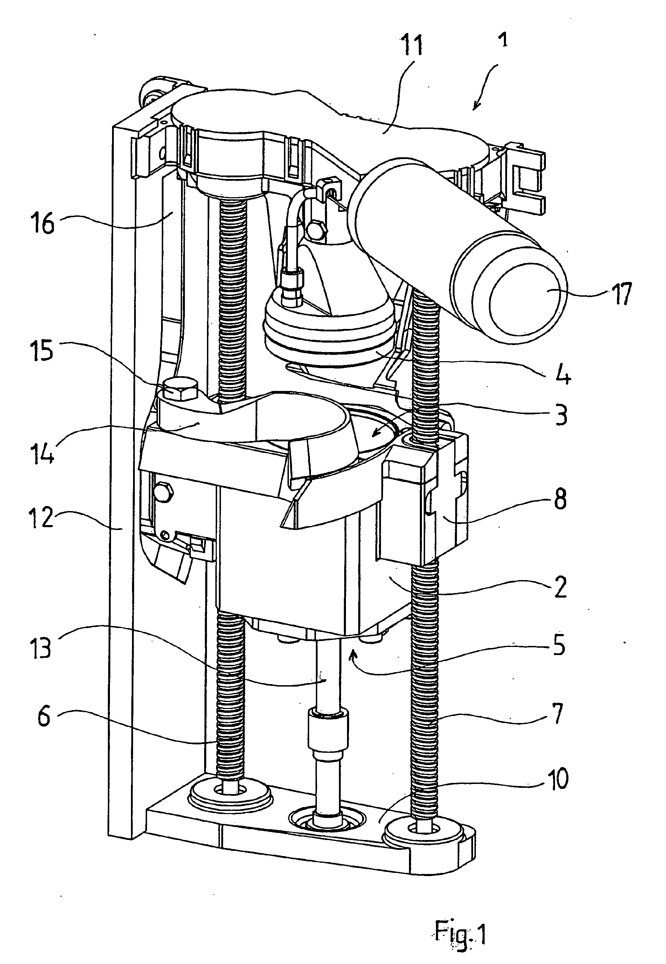

Die in Figur 1 dargestellte Kaffeemaschine 1 weist einen Brühkopf 2 mit einer zylindrischen Brühkammer 3 auf, welche durch ein oberes Verschlusselement 4 in Form eines hieran angepassten zylindrischen Kolbens und ein unteres Verschlusselement 5 in Form eines entsprechend an die Brühkammer angepassten zylindrischen Kolbens verschließbar ist. Die Kaffeemaschine weist darüber hinaus zwei vertikale Führungselemente 6, 7 auf, die aus Gewindespindeln mit gegenläufiger Gewindesteigung bestehen und an denen der Brühkopf 2 über Spindelmuttern 8, 9 festgelegt ist. Die beiden Gewindespindeln 6, 7 sind miteinander über einen unteren Gestellschenkel 10 und einen oberen Gestellschenkel 11 verbunden, wobei die beiden Gestellschenkel 10, 11 wiederum miteinander über einen seitlichen Rahmen 12 verbunden sind.

Der obere Kolben 4 ist am oberen Gestellschenkel 11 ortsfest befestigt, wohingegen der unter Schenkel 5 im Brühkopf 2 festgelegt ist, allerdings so, dass er sich gegenüber der Brühkammer bzw. dem Brühkopf in Vertikalrichtung bewegen kann. Um den unteren Kolben von einer Höhenverstellung des Brühkopfs 2 zu entkoppeln, ist an der Unterseite des Kolbens 5 eine untere Kolbenstange 13 angebracht, über die sich der untere Kolben am unteren Gestellschenkel 10 abstützen kann.

Auf der Oberseite des Brühkopfs 2 ist schließlich noch ein Auswerfer 14 zum Abstreifen von ausgelaugtem Kaffeepulver vorgesehen, der um eine vertikale Achse einer Schraube 15 schwenkbar am Brühkopf 2 festgelegt ist und wobei die Schwenkbewegung über eine am seitlichen Rahmen 12 angebrachte Kulissenführung 16 beim Höhenverstellen des Brühkopfs 2 erzeugt werden kann.

Insgesamt bilden somit der obere Gestellschenkel 11, der seitliche Rahmen 12 und der untere Gestellschenkel 10 das stabilisierende Gestell, an dem die beiden Führungselemente 6, 7 in zueinander paralleler vertikaler Erstreckung angebracht sind. Über einen am oberen Gestellschenkel 11 positionierten Antriebsmotor 17 werden die beiden Gewindespindeln in gegenläufige Antriebsbewegungen in Rotationsrichtung angetrieben, was über die Spindelmuttern 8, 9 zu einer vertikalen Höhenverstellung des Brühkopfs 2 führt. Auf diese Weise kann der Brühkopf 2 so weit nach oben verfahren werden, bis der obere Kolben 4 in die Brühkammer 3 eintaucht. In gleicher Weise führt ein vertikales Verfahren des Brühkopfs 2 nach unten dazu, dass sich der im Brühkopf 2 angeordnete untere Kolben 5 aufgrund seiner unteren Kolbenstange 13 am unteren Gestellschenkel 10 abstützt und sich bei einer weiteren Höhenverstellung des Brühkopfs 2 nach unten relativ zur Brühkammer 3 nach oben bewegt, im Extremfall soweit, bis der untere Kolben 5 bündig mit der Oberkante der Brühkammer 3 abschließt und der Abstreifer 14 das auf dem unteren Kolben liegende Kaffeemehl abstreifen kann.

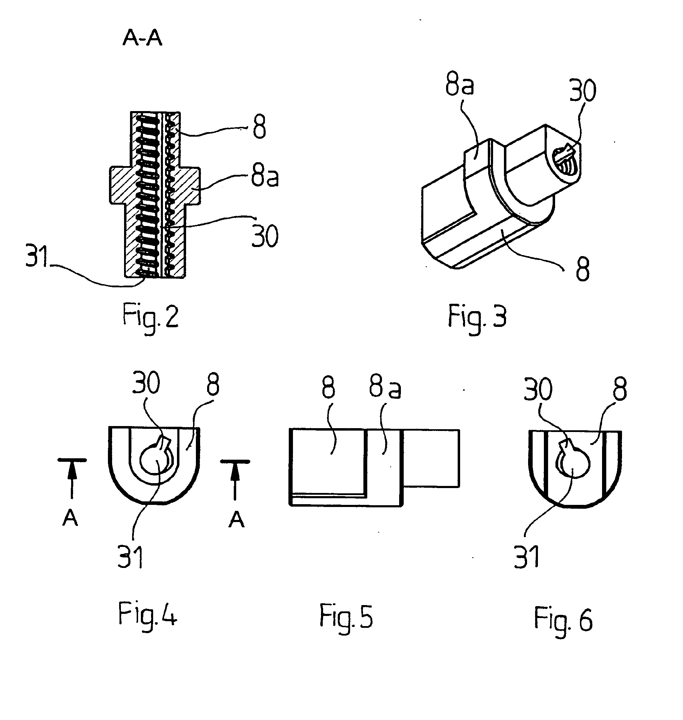

In den Figuren 2 bis 6 ist die Spindelmutter 8 im Vertikalschnitt (Figur 2), in perspektivischer Seitenansicht (Figur 3), in Draufsicht (Figur 4), in Seitenansicht (Figur 5) sowie in Unteransicht (Figur 6) dargestellt. Vor allem in den Figuren 3, 4 und 6 ist eine Öffnung 31 erkennbar, die sich über die gesamte Höhe des Spindelmutter 8 erstreckt und aus einer radialen Querschnittserweiterung besteht und so eine die gesamte Spindelmutter 8 durchquerende Entlastungsnut bildet. Im Bereich dieser Öffnung bzw. Entlastungsnut 30 liegt die Spindelmutter nicht an der von ihr beaufschlagten Gewindespindel an, sondern weist dort einen horizontalen Rücksprung auf, der das Abführen von etwaigem in den Zwischenraum zwischen Gewindespindel und Spindelmutter gelangendem Schmutz begünstigt.

Im dargestellten Ausführungsbeispiel weist die Öffnung 30 einen über die Höhe der Spindelmutter 8 gleich bleibenden rechteckigen Horizontalquerschnitt auf, der beispielsweise in der Größenordnung von 2 mal 4 mm liegt und sich an die Gewindebohrung 31 der Spindelmutter 8 radial anschließt.

Zusammenfassend bietet die vorliegende Erfindung den Vorteil, Antriebe für Kaffeemaschinen nunmehr an nahezu beliebigen Stellen an höhenverstellbare Brühköpfe ankoppeln zu können, ohne hierfür platzverbrauchende Abschirmmaßnahmen gegen Verschmutzung von Antriebsspindeln bzw. die Antriebsspindeln beaufschlagende Spindelmuttern vorsehen zu müssen. Erzielt wird dieser Vorteil in einfacher Weise durch eine Entlastungsnut, die den Schmutz entlang der Antriebsspindel auf die unproblematische Unterseite der Spindelmutter abführt.

## Patentansprüche

1. Kaffeemaschine mit einem Brühkopf (2), einem oberen Verschlusselement (4) und einem unteren Verschlusselement (5), wobei der Brühkopf eine zylinderförmige Brühkammer (3) mit vertikaler Zylinderachse aufweist, die durch das obere Verschlusselement und das untere Verschlusselement verschließbar ist und wobei der Brühkopf an zumindest einen vertikalen Führungselement (6, 7) festgelegt und über dieses höhenverstellbar in der Kaffeemaschine (1) angeordnet ist,
**dadurch gekennzeichnet,**
**dass** das Führungselement (6, 7) aus einer Gewindespindel besteht, **dass** der Brühkopf (2) über eine Spindelmutter (8, 9) an der Gewindespindel festgelegt ist und dass die Spindelmutter an ihrer die Spindel beaufschlagenden radialen Innenseite zumindest eine sich über die gesamte Höhe der Spindelmutter erstreckende Öffnung (30) in Form einer lokalen radialen Querschnittsvergrößerung aufweist.

2. Kaffeemaschine nach zumindest Anspruch 1,
**dadurch gekennzeichnet,**
**dass** die sich über die gesamte Höhe der Spindelmutter (8, 9) erstreckende Öffnung (30) eine Entlastungsnut bildet.

3. Kaffeemaschine nach zumindest Anspruch 1,
**dadurch gekennzeichnet,**
**dass** sich die Öffnung (30) im Wesentlichen in Axialrichtung der Spindelmutter (8, 9) erstreckt.

4. Kaffeemaschine nach zumindest Anspruch 1,
**dadurch gekennzeichnet,**
**dass** die Öffnung schraubengangförmig verläuft.

5. Kaffeemaschine nach zumindest einem der vorstehenden Ansprüche,
**dadurch gekennzeichnet,**
**dass** die Öffnung (30) einen über die axiale Länge im Wesentlichen gleich bleibenden Horizontalquerschnitt aufweist.

6. Kaffeemaschine nach zumindest einem der Ansprüche 1 bis 4,
**dadurch gekennzeichnet,**
**dass** die Öffnung einen sich über die axiale Länge vergrößernden Horizontalquerschnitt aufweist.

7. Kaffeemaschine nach zumindest einem der vorstehenden Ansprüche,
**dadurch gekennzeichnet,**
**dass** die in Umfangsrichtung der Gewindemutter (8) gemessene Breite der Öffnung (30) in der Größenordnung von wenigen Millimetern liegt.

8. Kaffeemaschine nach zumindest einem der vorstehenden Ansprüche,
**dadurch gekennzeichnet,**
**dass** die in Radialrichtung der Gewindemutter (8) gemessene Tiefe der Öffnung (30) in der Größenordnung von wenigen Millimetern liegt.

## Claims

1. Coffee machine having a brewing head (2), an upper closure element (4) and a lower closure element (5), the brewing head having a cylindrical brewing chamber (3) with a vertical cylinder axis, which brewing chamber is closable by the upper closure element and the lower closure element, and the brewing head being fixed on at least one vertical guide element (6, 7) and being arranged in the coffee machine (1) so as to be adjustable in height by means of that guide element,
**characterised in that**
the guide element (6, 7) consists of a threaded spindle; the brewing head (2) is fixed on the threaded spindle by means of a spindle nut (8, 9), and the spindle nut has on its radial inner side acting upon the spindle at least one opening (30) in the form of a local radial increase in cross-section extending over the entire height of the spindle nut.

2. Coffee machine according to at least claim 1,
**characterised in that**
the opening (30) extending over the entire height of the spindle nut (8, 9) forms a discharge groove.

3. Coffee machine according to at least claim 1,
**characterised in that**
the opening (30) extends substantially in the axial direction of the spindle nut (8, 9).

4. Coffee machine according to at least claim 1,
**characterised in that**
the opening runs helically.

5. Coffee machine according to at least one of the preceding claims,
**characterised in that**
the opening (30) has a horizontal cross-section that remains substantially constant over the axial length.

6. Coffee machine according to at least one of claims 1 to 4,
**characterised in that**
the opening (30) has a horizontal cross-section that increases in size over the axial length.

7. Coffee machine according to at least one of the preceding claims,
**characterised in that**
the width of the opening (30), measured in the circumferential direction of the threaded nut (8), is in the order of a few millimetres.

8. Coffee machine according to at least one of the preceding claims,
**characterised in that**
the depth of the opening (30), measured in the radial direction of the threaded nut (8), is in the order of a few millimetres.

## Revendications

1. Machine à café avec une tête d'infusion (2), un élément de fermeture supérieur (4) et un élément de fermeture inférieur (5), sachant que la tête d'infusion présente une chambre d'infusion cylindrique (3) ayant un axe de cylindre vertical, qui peut être fermée par l'élément de fermeture supérieur et par l'élément de fermeture inférieur, et sachant que la tête d'infusion est fixée sur au moins un élément de guidage vertical (6, 7) et, au moyen de cet élément, est disposée dans la machine à café (1) avec possibilité de réglage en hauteur
**caractérisée en ce que** l'élément de guidage vertical (6, 7) consiste en une broche filetée, **en ce que** la tête d'infusion (2) est fixée au moyen d'un écrou de broche (8, 9) sur la broche filetée, et **en ce que** l'écrou de broche présente, sur sa face intérieure radiale sollicitant la broche, au moins une ouverture (30) s'étendant sur toute la hauteur de l'écrou de broche, sous la forme d'un agrandissement radial local de la section.

2. Machine à café selon au moins la revendication 1, **caractérisée en ce que** l'ouverture (30) s'étendant sur toute la hauteur de l'écrou de broche (8, 9) forme une rainure de décharge.

3. Machine à café selon au moins la revendication 1, **caractérisée en ce que** l'ouverture (30) s'étend essentiellement dans la direction axiale de l'écrou de broche (8, 9).

4. Machine à café selon au moins la revendication 1, **caractérisée en ce que** l'ouverture s'étend sous une forme hélicoïdale.

5. Machine à café selon au moins une des revendications précédentes, **caractérisée en ce que** l'ouverture (30) présente une section horizontale qui reste sensiblement la même sur toute la longueur axiale.

6. Machine à café selon au moins une des revendications 1 à 4, **caractérisée en ce que** l'ouverture présente une section horizontale qui augmente sur la longueur axiale.

7. Machine à café selon au moins une des revendications précédentes, **caractérisée en ce que** la largeur, mesurée dans la direction circonférentielle de l'écrou de broche (8), de l'ouverture (30) est de l'ordre de quelques millimètres.

8. Machine à café selon au moins une des revendications précédentes, **caractérisée en ce que** la profondeur, mesurée dans la direction radiale de l'écrou de broche (8), de l'ouverture (30) est de l'ordre de quelques millimètres.
